# EUROPEAN PATENT APPLICATION

(11) **EP 1 098 075 A2**
(43) Date of publication of application: **09.05.2001**
(21) Application number: 00309736.7
(22) Date of filing: 03.11.2000
(51) Int. Cl.: F02B 67/00

(54) **Vibration absorption assembly**

(30) Priority: 05.11.1999 US 435309
(71) Applicant: Ford Global Technologies, Inc., Dearborn, Michigan 48126 (US)
(72) Inventor: Berger, Alvin Henry, Brownstown, Michigan 48192 (US); Burch, Craig Edward, West Bloomfield, Michigan 48324 (US)
(74) Representative: Messulam, Alec Moses

(57) **Abstract**

A vibration absorption assembly 12 and method for making the same having a base portion 30 which is movably connected to an intermediate portion 32 and to a top portion or cover 32. Assembly 12 contains several apertures or cavities 26 which operatively contain a pair of balls or spherical members 28 which absorb or dampen the vibrations emanating from a rotating member, such as a diesel fuel injection pump 14. Oil 27 is communicated into apertures 26 and is effective to lubricate the moving members 28. Further, portion or member 32 is selectively movable to allow access to several of the cavities or apertures 26 in order to allow fuel injection pump 12 to be removed from the engine 10 by use of fasteners 80, 82, and 84.

## Description

The present invention relates to a vibration absorption assembly and more particularly, to a vibration absorption assembly for use with a fuel injection pump to absorb absorbs torsional vibrations emanating from the fuel injection pump.

Many rotatable engine components, such as a fuel injection pump, encounter irregular resistance which tends to cause torsional vibration. Such torsional vibration is undesirable since it causes fatigue in the vibrating component and/or increases the stress transmitted to other components, potentially damaging these other components and adversely affecting overall engine operation.

For example, the torsional vibrational energy emanating from a diesel fuel pump increases the stress which is communicated to its drive chain, which typically couples the fuel injection pump to the crankshaft. This stress may cause the chain to fail, and may cause damage to the engine. In order to reduce the amount of torsional vibration induced stress and fatigue produced by a rotatably movable engine component, such as a fuel pump, it is desirable to reduce the vibrations emanating from that component.

Some attempts have been made to reduce torsional vibrations by the use of vibration absorbers with rubber type elastic members which were respectively tuned to a particular frequency. Such attempts have failed to adequately function over long periods of time because the elasticity of the constituent rubber material varies greatly with variations in operating temperatures, and over a period of time hot engine oil damages the rubber. Furthermore, such prior attempts did not adequately allow the fuel injection pump, or the other vibrating component upon which these elements were deployed, to be easily serviced and/or quickly removed from the engine.

There is, therefore, a need for a vibration absorption assembly which overcomes some or all of the previously delineated drawbacks of prior vibration absorption assemblies, which substantially reduces and/or dampens the amount of vibration which is generated by and/or which emanates from a diesel fuel injection pump, and which allows the diesel fuel injection pump to be easily and quickly serviced and/or removed from the engine.

It is a first object of the present invention to provide a vibration absorption assembly which overcomes some or all of the previously delineated drawbacks of prior vibration absorption assemblies.

It is a second object of the invention to provide a vibration absorption assembly which overcomes some or all of the previously delineated drawbacks of prior vibration absorption assemblies and which allows for the selective, efficient, and reliable absorption and/or reduction in the amount of vibrational energy which is generated by and/or which emanates from a diesel type fuel pump.

It is a third object of the invention to provide a vibration absorption assembly which overcomes some or all of the previously delineated drawbacks of prior vibration absorption assemblies and which allows a diesel type fuel injection pump to be easily serviced and/or removed from the engine.

It is a fourth object of the invention to provide a vibration absorption assembly which overcomes some or all of the previously delineated drawbacks of prior vibration absorption assemblies and which allows the vibration absorption assembly to be lubricated, thereby increasing the operating life of the vibration absorption assembly.

According to a first aspect of the present invention, a vibration absorption assembly for use in combination with a vibrating member is provided. The vibration absorption assembly comprises a housing which is mounted upon the selectively vibrating member and which includes at least one cavity; a first aperture which communicates with the at least one cavity; a second aperture which communicates with the at least one cavity and which co-operates with the first aperture, to cause oil to enter the cavity, to traverse the cavity, and to exit the cavity through the second aperture; and a pair of members which are movably deployed within the cavity and which co-operatively dampen the vibration of the vibrating member, the pair of members being lubricated by the oil which traverses the cavity.

According to a second aspect of the invention, a method for reducing the amount of vibrations emanating from a selectively rotatable member is provided. The method comprises the steps of forming at least one cavity within a portion of the selectively rotatable member, the cavity having opposed first and second end portions which access the cavity; movably disposing a pair of elements within the at least one tapered cavity; and tapering the first of the end portions, effective to substantially prevent the pair of elements from exiting the at least one cavity through the first of the end portions; and selectively covering the second of the end portions, thereby allowing the elements to be selectively and movably captured within the at least one cavity, effective to reduce the vibrations of the member.

The invention will now be described further, by way of example, with reference to the accompanying drawings, in which:
Figure 1 is a front sectional view of an internal combustion diesel engine having a vibration absorption assembly which is produced and/or which is formed in accordance with the teachings of the preferred embodiment of the invention;
Figure 2 is a front view of the vibration absorption assembly which is produced and/or which is formed in accordance with the teachings of the preferred embodiment of the invention, which is shown in Figure 1, and which has the cavity covering elements selectively moved to a first position, which allows the moving elements to be removed from the cavities, allowing tool access to the fuel pump attaching screws;
Figure 3 is a view of the vibration absorption assembly which is similar to that shown in Figure 2, but which illustrates the movement of the cavity covering elements to a second position, which prevents the moving elements from exiting the cavities during normal engine operation;
Figure 4 is a perspective unassembled view of the vibration absorption assembly which is shown in Figures 1, 2, and 3;
Figure 5 is a side view of the vibration absorption assembly which is shown in Figures 1, 2, 3 and 4;
Figure 6 is a fragmented sectional view of the vibration absorption assembly which is shown in Figures 1, 2, 3, 4 and 5, which is taken along view line 6-6, and which illustrates the flow of oil through a portion of the assembly; and
Figure 7 is a fragmented sectional view of the vibration absorption assembly which is shown in Figures 1, 2, 3, 4 and 5, which is taken along view line 7-7, and which illustrates the vibration dampening aspects of the assembly.

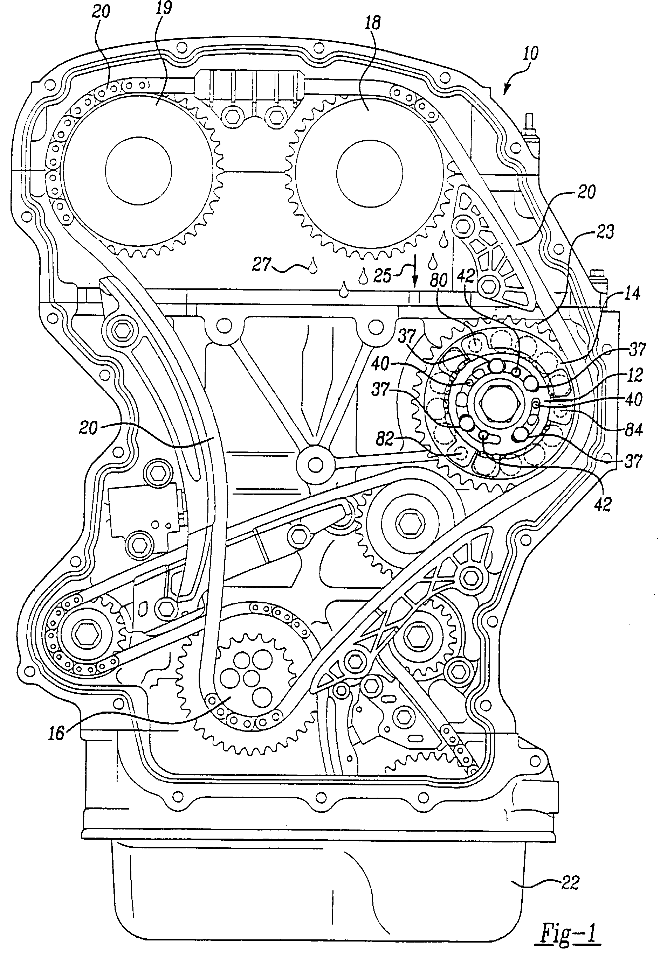

Referring now to Figure 1, there is shown a conventional internal combustion diesel engine 10 having a vibration absorption assembly 12 of the invention incorporated into the drive sprocket 23 of the fuel injection pump 14. The vibration absorption assembly may alternatively be formed separately from, and coupled for rotation with, the fuel injection pump or any other component susceptible to torsional vibrations.

As shown best in Figure 1, the diesel engine 10 further includes a crankshaft 16, exhaust camshaft 19, and intake camshaft 18. Fuel injection pump 14, crankshaft 16, and camshafts 18, 19 are interconnected by a chain 20 which transmits torque from the crankshaft 16 to the camshafts 18, 19 and the fuel injection pump 14.

The vibration reduction assembly 12 serves to attenuate vibrations emanating from the fuel pump assembly 14, which can damage the chain 20 and other engine components.

The chain 20 and the various sprockets are lubricated by oil 27 which typically drips down from camshaft 18, in the direction of arrow 25. This oil 27 is drawn into the rotating vibration absorption assembly 12, and is effective to lubricate certain vibration absorption components of the vibration reduction assembly 12 to reduce wear within the assembly 12. The available oil 27 then exits from the assembly 12 and eventually drains, into a sump or reservoir 22.

As shown best in Figures 2, 3, and 4, assembly 12 includes a round base portion 30 constituted in the preferred embodiment of the invention by the fuel pump drive sprocket. The base portion 30 has a central aperture 7 which allows the base portion 30 to be mounted upon the fuel injection pump 14. The base portion 30 further includes two sets of evenly spaced sprocket teeth 24 and 25 engaged by the duplex chain 20.

The base portion 30 further includes substantially identical slotted apertures 55, 57, 59, 63; slotted aperture 61, slotted "blind" type aperture 53, and a pair of substantially identical and generally circular apertures 42. The apertures 55, 57, 59, 63, and 42 are used to secure portions of the assembly 12 upon the base member 30. Apertures 55, 57, 59, and 63 are further used to secure assembly 12 upon fuel pump assembly 14.

Certain substantially identical, circular, axially extending cavities 26 that are tapered at their end are also arranged in an evenly spaced circumferential pattern, within base portion or member 30 and around the central aperture 7. Each of the cavities 26 contains two substantially identical spherical balls 28 which absorb the vibrational energy emanating from the fuel pump assembly 14. Each ball 28 acts as a rotary pendulum which rolls about the inner surface of its cavity 26 in synchronism with the rotation of the sprocket. By suitable dimensioning of the diameter of the balls 28, the diameter of the cavities 26 and the distance of the centres of the cavities 26 from the centre and axis of rotation of the base portion 30, it is possible to ensure that the balls roll around the cavities at the same frequency as, and in phase opposition with, the torsional vibrations that are to be suppressed; so as to attenuate the undesired vibrations.

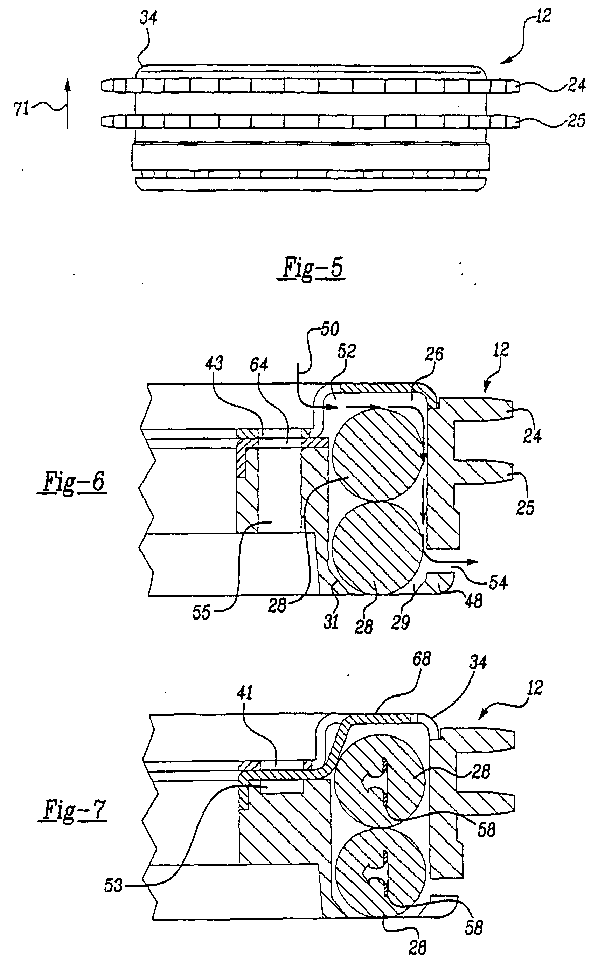

In a preferred embodiment of the invention, in which the vibrations to be suppressed are a sixth harmonic of the engine speed, the cavities 26 have an optimum diameter of 15.46328 mm, their centres are at a distance of 43.26836 mm from the axis of rotation of the base portion 30 and the balls have an optimum diameter of 15.08125 mm. The tapered portion 29, shown in Figure 6, at the bottom of each cavity 26 serves to retain the balls 28 from exiting the bottom portion or surface 31 of member 30. A slotted aperture 54 is formed within the base portion 30. Particularly, the slotted aperture 54 is proximate to and communicates with each of the cavities 26 and aperture 54 is formed slightly forward of surface 31.

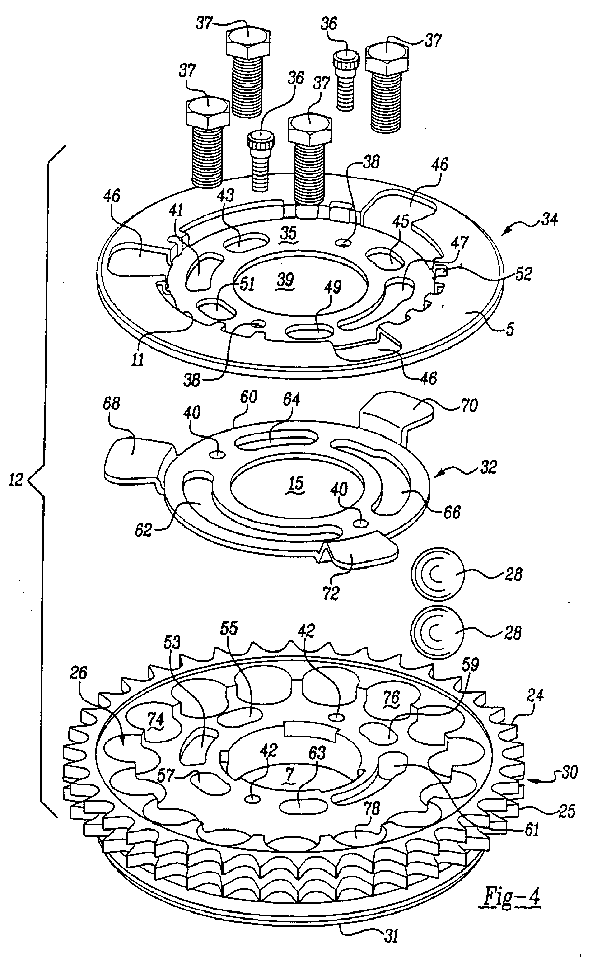

As best shown in Figure 4, assembly 12 further includes an intermediate member 32, and a saucer-shaped front cover member 34 having a flat depressed centre portion 35, connected by a wall portion 11 to a raised flat upper portion 5. The depressed portion 35 includes substantially identical slotted apertures 43, 45, 49, and 51, relatively long slotted apertures 41 and 47, a pair of substantially identical and generally circular apertures or holes 38, and a central aperture 39. Central aperture 39 is substantially similar to aperture 7. Apertures 52 extend through the integrally formed wall 11 while apertures 46 extend through both the wall 11 and the upper portion 5.

The intermediate member 32 also includes a generally circular and flat member 60 having a pair of substantially identical and generally circular apertures or holes 40, slotted apertures 62, 64, and 66, and a central aperture 15 which is substantially identical to apertures 7 and 39. Intermediate member 32 also includes several raised tabs or flanges 68, 70, and 72 which are each substantially identical in size and shape to apertures 46.

During assembly, a first fastener, such as a shoulder type rivet 36, is inserted within a first of the apertures 38 of portion 34, within aperture 66 of portion 32, and within a first of the apertures 42 of portion 30. A second fastener 36 is placed within and traverses a second of the apertures 38, within aperture 62, and within a second of the apertures 42. The fasteners 36 act to sandwich the member 32 between the member 34 and the base portion 30 while allowing member 34 to selectively move in the direction of arrow 71. Apertures 51 and 49 respectively communicate with apertures 57 and 63 through aperture 62. Aperture 43 communicates with aperture 55 through aperture 64 and aperture 45 communicates with aperture 59 through aperture 66. A fastener 37 is placed within and through each pair of communicating apertures 43, 55; 45, 59; 49, 63; and 51, 57, thereby securing the assembly 12 (e.g., sprocket 23) to the fuel pump assembly 14. Apertures 41, 40, and 53, as well as apertures 47, 40, and 61, also communicate. A screwdriver or another implement may be inserted within one or both of the communicative apertures 41, 40, and 53, or 47, 40, and 61, to rotate intermediate member 32 within assembly 12. Communicating apertures 47, 66, and 61 allow passage of a conventional alignment tool, through the assembly 12, to hold the rotary position of the fuel pump assembly 14 in the proper timing relationship to the crankshaft assembly 16 during engine assembly. Fasteners 37 also allow the intermediate member 32 to be rotatably secured between top member 34 and bottom member 30. Also, apertures 7, 15, and 39 cooperate to allow assembly 12 to receive the hub of a vibrating member, such as a diesel engine fuel injection pump. The vibration absorber assembly 12 dampens the torsional vibration of the member by movement of the balls 28 within the apertures 26, in a manner more fully described below.

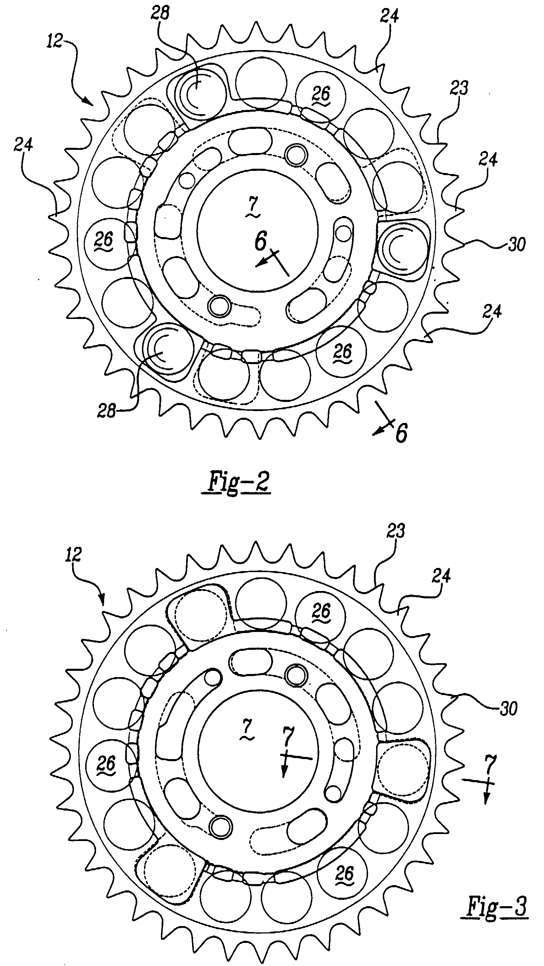

Servicing the fuel pump 12 is also accomplished quickly. That is, as best shown in Figures 2, 3 and 4, member 32 is movable, such as by placement of a screwdriver within communicating apertures 47, 40, 61 or 41, 40, 53, rotating member 32 from a first position, shown best in Figure 3, in which flanges 68, 70, and 72 respectively cover apertures 74, 76, 78 each of which forms a portion of the apertures 26, thereby respectively co-operating with the tapered portions 29 of apertures 74, 76, and 78 to retain the balls or spherical members 28, within the apertures 74-78, to a second position, shown best in Figure 2, in which flanges 68, 70, 72 do not overlay (e.g., are remote from) these respective apertures 74, 76, 78, thereby allowing the contained spherical members 28 to be removed from these apertures 74, 76, and 78, through apertures 46 of the front cover member 34, to allow access to servicing screws 80, 82, 84, which reside behind apertures 74, 76, 78 and which are shown in phantom in Figure 1. In this manner, fuel pump 14 may be relatively quickly and easily serviced and/or removed from the diesel engine 10.

When vibration absorption assembly 12 is rotated about the central aperture 7, the available oil 27, resident within engine 10, follows path 50, as best shown in Figure 6, and is drawn radially into the cavities 26 through slotted apertures 52, by centrifugal force. The oil 27 then follows path 50, axially traversing the cavity 26 in a direction which is substantially perpendicular to the direction that the oil 27 entered the cavity 26, and lubricates the surfaces of the balls 28 and the cavity 26. The centrifugal force created from the rotation of assembly 12 the acts to expel the oil 27 radially from the cavity 26 through the slotted aperture 54. Thus, the oil leaves in a direction which is substantially perpendicular to the direction that the oil traversed the cavity 26 and which is substantially parallel to the direction that the oil entered the cavity 26. It should be appreciated that the oil 27 moving through aperture or cavity 26 removes wear debris, and/or particles generated by the movement of the balls 28 and reduces the friction of the balls 28 allowing balls 28 to more easily move or rotate, thereby increasing the operating life of the assembly 12.

As best shown in Figure 7, during operation, the produced torsional vibration from fuel pump 14 is communicated to assembly 12. The balls 28 roll around the surfaces of the cavities 26 as illustrated by arrows 58, and act as pendulums that counteract the torsional vibrations.

The use of more than one ball in each cavity 26 allows the total effective mass of the pendulums to be increased so as to increase the amount of vibrational energy absorbed by the pendulums for a given size of cavity and a given distance of the centres of the cavities from the axis of rotation which dimensions are constrained by the configuration of the fuel injection pump 14.

## Claims

1. A vibration absorption assembly for use in combination with a member susceptible to torsional vibration, said vibration absorption assembly comprising:
a housing for coupling to the vibrating member to rotate therewith about an axis,
at least one axially extending cylindrical cavity formed in said housing at a distance from the axis, and
a rolling element of smaller diameter than the cavity deployed within the cavity to roll on the inner surface of the cavity in synchronism with the rotation of the housing so as to attenuate torsional vibrations of the member,
characterised in that two or more spherical elements are deployed within each cavity.

2. An assembly as claimed in claim 1, wherein apertures communicate with the cavity at its opposite axial ends to permit a lubricant to flow axially through the cavity.

3. An assembly as claimed in claim 2, wherein, in operation, the lubricant enters the cavity radially through a first aperture at one end, travels axially along the cavity and exits the cavity radially through a second aperture at the opposite end.

4. An assembly as claimed in any preceding claim, wherein said housing comprises a base member having a first and a second row of protrusions and at least one tapered cavity;
a pair of substantially spherical members which movably reside within said at least one cavity; and
a second member which is movably coupled to said base portion and which is movable from a first position in which said second member overlays said at least one cavity to a second position in which said second member is remotely positioned from said at least one cavity.

5. An assembly as claimed in claims 3 and 4, wherein said base member further includes said first and second apertures through which oil flows into and out of the cavity.

6. A method of reducing torsional vibrations of a rotatable member, said method comprising the steps of:
providing at least one cavity within a portion of said selectively rotatable member, said cavity having opposed first and second end portions which access said cavity, the first of the end portions of the cavity being tapered;
movably disposing at least one rolling element within said at least one cavity in order to reduce vibrations of said member, the tapered end portion acting to prevent said rolling element(s) from exiting said at least one cavity through said first of said end portions; and
selectively covering said second of said end portions, thereby allowing said rolling element(s) to be selectively and movably captured within said at least one cavity,

7. A method as claimed in claim 6, wherein two spherical rolling elements of the same size are disposed within the or each cavity.

8. A method as claimed in claim 7, wherein said member comprises a diesel fuel injection pump.

9. A method as claimed in claim 8, wherein said portion comprises a chain sprocket portion of said diesel fuel injection pump.

10. A method as claimed in any of claims 6 to 9, further comprising the steps of:
providing oil; and
causing said oil to enter said at least one cavity.

11. A method as claimed in claim 10, wherein said step of causing said oil to enter said cavity comprises the step of causing said oil to traverse said at least one cavity in an axial direction.

12. A method as claimed in claim 11, further comprising the step of causing said oil to enter said at least one cavity radially.

13. A method as claimed in claim 8 or any claim appended thereto, wherein said fuel pump has at least one fastener which fastens said fuel pump to an engine, said method further comprising the step of placing said fastener within said first end portion of said at least one cavity.

14. A method as claimed in any of claims 6 to 13, wherein the step of selectively covering said second of said end portions comprises the step of providing a member; and movably coupling said member to said portion of said vibrating member.

15. A vibration absorption assembly for use in combination with a member susceptible to torsional vibration, said vibration absorption assembly comprising:
a housing for coupling to the vibrating member to rotate therewith about an axis,
at least one axially extending cylindrical cavity formed in said housing at a distance from the axis,
a rolling element of smaller diameter than the cavity deployed within the cavity to roll on the inner surface of the cavity in synchronism with the rotation of the housing so as to attenuate torsional vibrations of the member, and
means for directing a flow of lubricant through the cavity.

16. A vibration absorption assembly integrated into a drive sprocket of a fuel injection pump of a diesel engine, said vibration absorption assembly comprising:
at least one axially extending cylindrical cavity formed in said sprocket at a distance from the axis,
at least one rolling element of smaller diameter than the cavity deployed within the cavity to roll on the inner surface of the cavity in synchronism with the rotation of the housing so as to attenuate torsional vibrations of the member, and
a displaceable cover serving to retain the rolling element(s) within the cavity,
the rolling element(s) being removable from the cavity upon displacement of the cover to afford access to a fastener positioned in line with the cavity.
